# EUROPEAN PATENT SPECIFICATION

(11) **EP 3 959 128 B1**
(45) Date of publication and mention of the grant of the patent: **22.01.2025**
(21) Application number: 20730682.0
(22) Date of filing: 23.04.2020
(51) Int. Cl.: B64U 50/32, B64D 31/16, B64U 50/19, B64U 40/20, B64D 37/30, B64D 37/04, H01M 8/04082, H01M 8/04537, H01M 8/04664, H01M 8/04858, H01M 8/249, B64D 45/00, B64U 60/50

(54) **UAV HAVING CONFIGURABLE FUEL CELL POWER SYSTEM**
UAV MIT KONFIGURIERBAREM BRENNSTOFFZELLENSTROMSYSTEM
UAV À SYSTÈME D'ALIMENTATION DE PILE À COMBUSTIBLE CONFIGURABLE

(30) Priority: 23.04.2019 GB 201905672; 23.04.2019 US 201962837615 P
(43) Date of publication of application: 02.03.2022
(73) Proprietor: Intelligent Energy Limited, Leicestershire LE11 3GB (GB)
(72) Inventor: KELLY, Andrew Paul, Leicestershire LE11 3GB (GB); SCRACE, Matthew Charles, Leicestershire LE11 3GB (GB); WILDE, Ronan Elliot, Leicestershire LE11 3GB (GB); LAWSON, Geoff Mark, Leicestershire LE11 3GB (GB); FRASER, Iain Matheson, Leicestershire LE11 3GB (GB)
(74) Representative: Keltie LLP
(86) International application number: PCT/GB2020/051006
(87) International publication number: WO 2020/217058

(56) References cited:
- WO-A1-2018/046990
- CN-A- 106 697 274
- GB-A- 2 537 935
- US-A1- 2017 240 291

## Description

### TECHNICAL FIELD

The present disclosure relates generally to configurable systems for assembling fuel cell power modules (FCPMs) for an unmanned aerial vehicle (UAV). Further disclosed is a way to gain center of gravity (CoG) flexibility and control, when integrating fuel cell stacks onto a UAV.

### BACKGROUND

UAVs, which are also known as drones, are becoming increasingly popular for applications such as photography, surveillance, farm maintenance (e.g., pest control), atmospheric research, fire control, wildlife monitoring, package delivery, and military purposes. UAVs generally fall into two categories, namely multirotor UAVs used generally in commercial applications and fixed wing UAVs used for military applications. UAVs are equipped with navigation systems. The payloads in the UAVs vary depending on the end-application and may comprise video cameras, reconnaissance equipment, remote sensing devices, pesticides held in a suitable container that is capable of spraying, fire retardants, packages for delivery, and the like. UAVs are typically smaller than manned aircraft and may weigh, for example, between a few grams and dozens of kilograms.

UAVs require power to provide propulsion and to power auxiliary functions (e.g., operating payloads, such as image or video capture, signal telemetry, etc.) or other on-board systems. For many applications, the computing power required on-board the vehicle in order to provide necessary functionality may represent a significant power demand. This is particularly the case in autonomous UAVs in which an on-board control system may make decisions regarding flight path and the deployment of auxiliary functions. Although the vehicle itself is unmanned, a UAV may be piloted remotely and may still be under some form of human control.

Some UAVs use primary batteries to provide power, although it is now more common to use secondary (rechargeable) batteries such as lithium-ion batteries. When power is supplied only by batteries, the flight time of UAVs may be limited because of the power demands of the propulsion and other on-board systems. In recent years, photovoltaic panels have been used to extend the flight range of UAVs. However, the power generating capacity of a photovoltaic panel depends on the ambient weather conditions and the time of day, and, subsequently, photovoltaic panels may not be appropriate for use in all circumstances. In addition, the power generation capacity of photovoltaic panels may be inadequate for some applications in which either high power (speed) propulsion is required, or the on-board systems of the UAV that provide its functionality are particularly heavy or demand substantial electrical power. The flight time and range of UAVs are generally a function of payload (weight) and the energy (Watt-hours) available from a power supply. Other power supplies include jet engines fueled by fuels such as gasoline and jet fuel for fixed wing military applications and fuel cells fueled by hydrogen and other fuels, such as propane, gasoline, diesel, and jet fuel. The UAVs typically return home, that is, to a home station or home base, after a flight to recharge or refill the power supplies.

Fuel cells are attractive power supplies for UAVs, may exceed the energy provided by batteries, and may extend flight time (or range) in many instances. Fuel cells are electro-chemical energy conversion devices that convert an external source fuel into electrical current. Many fuel cells use hydrogen as the fuel and oxygen (typically from air) as an oxidant. The by-product for such a fuel cell is water, making the fuel cell a very low environmental impact device for generating power. For an increasing number of applications, fuel cells are more efficient than conventional power generation, such as combustion of fossil fuel, as well as portable power storage, such as lithium-ion batteries.

Even with the advantages of using fuel cells, in some instances a power level supplied by one FCPM may not be enough for a particular application. But as demanded power output from an FCPM grows, the size of the stacks becomes unwieldy. For example, it is very difficult if not impractical to package a single, big lump of a fuel cell stack such that it can be mounted on a UAV. Another issue with known UAV powering approaches is that when the power supply fails mid-flight the mission and/or payload are at considerable risk of being damaged via a crash landing. Positioning and orientation of the different components mounted onto a frame of the UAV may also pose CoG and/or weight-balancing issues.

Document WO 2018/046990 A1 describes ground stations and methods for pre-flight health and safety check of PEM fuel cell powered unmanned aerial vehicles. The ground stations are described to be capable of reconditioning UAV fuel cell stacks and refilling the hydrogen supply. The methods are described to permit the checking and returning of UAVs back into flight service within a few minutes.

Document US 2017/240291 A1 describes a fuel cell power pack used as a power source in a multicopter which includes a fuel tank and a fuel cell stack for producing electrical energy using hydrogen supplied from the fuel tank and supplying the electrical energy to a battery. Since the fuel cell stack is disposed at a certain point of an arm extended from the aircraft body in the radius direction (a point affected by a descending air current generated by each rotating blade), the electrical energy can be produced using the descending air current generated by the rotating blade without configuring a separate blowing apparatus.

Document GB 2 537 935 A describes an unmanned aerial vehicle which comprises at least one fuel cell. The fuel cell provides a structural component of the vehicle. The structural component may form struts linking propulsion modules to a central body. Air inlets are associated with the fuel cells to provide air as an oxidant and/or coolant to the fuel cells. The fuel cells may form other parts of an aircraft structure such as a fuel cell within a tailplane or a fuel cell forming part of a wing structure.

### DISCLOSURE

According to the present invention there is provided an unmanned aerial vehicle (UAV) according to Claim 1. A preferred embodiment of the invention is defined in Claim 2. In the following description, embodiments will be described. These embodiments fall within the scope of the present invention only if they are in accordance with Claim 1.

Aspects of methods, systems and device disclosed herein for a mounting frame including but not limited to a payload,

A plurality of fuel cell stacks operable in a predefined configuration, each of the plurality of stacks being in a separate package;
one or more tanks configured to supply hydrogen to the plurality of stacks;
a propulsion system configured to receive an output power generated from the plurality of stacks;
a power controller configured to couple the plurality of stacks in the predefined configuration; and,
wherein the predefined configuration comprises the plurality of stacks arranged in one of parallel and series.

Aspects of methods, systems and device disclosed herein for a mounting frame including but not limited to an unmanned aerial vehicle, having
a mounting frame configured to mount a payload;
a plurality of fuel cell stacks operable in a predefined configuration, each of the plurality of stacks being in a separate package;
the mounting frame configured to relocate each stack to one of at least two positions;
one or more fuel tanks configured to supply hydrogen to the plurality of stacks;
a propulsion system configured to receive an output power generated from the plurality of stacks;
a power controller configured to couple the plurality of stacks in the predefined configuration, wherein the predefined configuration comprises the plurality of stacks arranged in one of parallel and series; and, wherein the position of a fuel cell stack is adjusted to balance the vehicle relative to the payload.

Aspects of methods, systems and device disclosed herein for a modular power supply for powering components of UAV, into which signal and power lines may be connected. Two or more fuel cell power modules (FCPMs) may be connected in series or parallel so that a power output is doubled and so that the end-user has a single communications port.

The power controller may be configured to communicate with the fuel cell stacks and other component(s) of the UAV. The controller may be configured to control at least one of the hydrogen supply, inert gas supply, electrical loads, and auxiliary power source.

In some instances, the power supplies are hybrid versions, wherein a combination of power supplies may be used. For example, when a fuel cell is used, any peak power requirement such as during take-off, may be supplemented using a battery. Fuel cells are attractive power supplies for UAVs, may exceed the energy provided by batteries, and may extend flight time (or range) in many instances. Fuel cells are electro-chemical energy conversion devices that convert an external source fuel into electrical current. Many fuel cells use hydrogen as the fuel and oxygen (typically from air) as an oxidant. The by-product for such a fuel cell is water, making the fuel cell a very low environmental impact device for generating power. For an increasing number of applications, fuel cells are more efficient than conventional power generation, such as combustion of fossil fuel, as well as portable power storage, such as lithium-ion batteries.

Even with the advantages of using fuel cells, in some instances a power level supplied by one FCPM may not be enough for a particular application. But as demanded power output from an FCPM grows, the size of the stacks becomes unwieldy. For example, it is very difficult if not impractical to package a single, big lump of a fuel cell stack such that it can be mounted on a UAV. Another issue with known UAV powering approaches is that when the power supply fails mid-flight the mission and/or payload are at considerable risk of being damaged via a crash landing. Positioning and orientation of the different components mounted onto a frame of the UAV may also pose CoG and/or weight-balancing issues.

Other features and advantages of the present disclosure will be set forth, in part, in the descriptions which follow and the accompanying drawings, wherein the preferred aspects of the present disclosure are described and shown, and in part, will become apparent to those skilled in the art upon examination of the following detailed description taken in conjunction with the accompanying drawings or may be learned by practice of the present disclosure. The advantages of the present disclosure may be realized and attained by means of the instrumentalities and combinations particularly pointed out in the appended claims.

### DRAWINGS

The foregoing aspects and many of the attendant advantages of this disclosure will become more readily appreciated as the same becomes better understood by reference to the following detailed description, when taken in conjunction with the accompanying drawings, wherein:
FIG. 1 schematically illustrates a UAV configured to operate via a plurality of modular fuel cell stacks, in accordance with one or more implementations.
FIG. 2 shows a representation of a UAV powered by two fuel cell power modules (FCPMs), in accordance with one or more implementations.
FIG. 3 shows another representation of a UAV powered by two FCPMs, in accordance with one or more implementations.
FIG. 4 shows another representation of a UAV powered by two FCPMs, in accordance with one or more implementations.
FIGs. 5A-5B show series and parallel configurations, respectively, of two FCPMs, in accordance with one or more implementations.

The components in the figures are not necessarily to scale, emphasis instead being placed upon illustrating the principles of the disclosure.. The failure to number an element in a figure is not intended to waive any rights. Unnumbered references may also be identified by alpha characters in the figures.

### FURTHER DISCLOSURE

The following detailed description includes references to the accompanying drawings, which form a part of the detailed description. The drawings show, by way of illustration, specific embodiments in which some disclosed aspects may be practiced. These embodiments, which are also referred to herein as "examples" or "options," are described in enough detail to enable those skilled in the art to practice methods and devices disclosed. The embodiments may be combined, other embodiments may be utilized, or structural or logical changes may be made without departing from the scope of the disclosure. The following detailed description is, therefore, not to be taken in a limiting sense, and the scope of the disclosure is defined by the appended claims.

Particular aspects of the disclosure are described below for the purpose of illustrating use of a plurality of fuel cells for powering UAVs. These fuel cells may be arranged in a series or parallel configuration, depending on particular use cases. Various modifications may be made, and the scope of the disclosure is not limited to the exemplary aspects described.

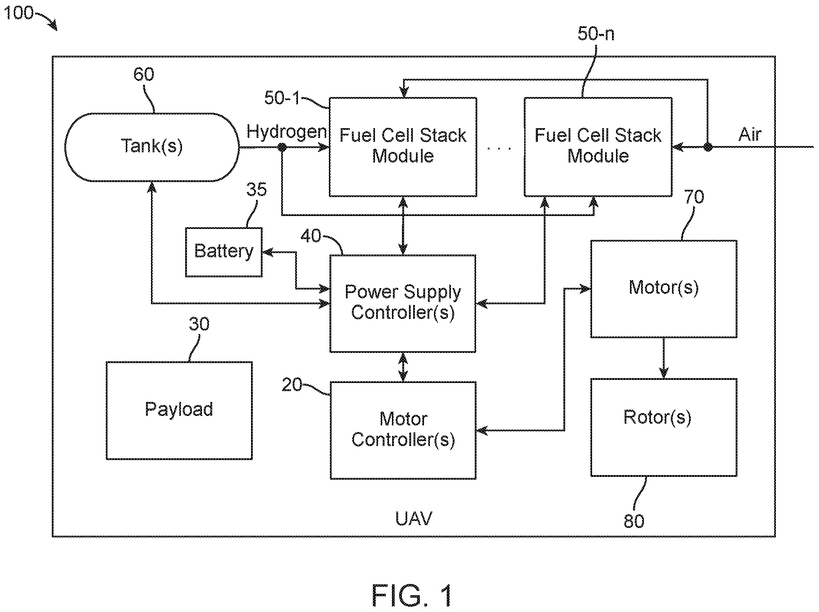

A schematic representation of an exemplary UAV 100 is shown in FIG. 1. UAV 100 comprises several components, such as a fuel cell power supply 90, which in turn comprises a plurality of fuel cell stack modules 50 (connected in series or parallel). The plurality of fuel cell stack modules 50 may each comprise fuel cell stack 54 and one or more fans 52. The plurality of fuel cell stack modules 50 interface with one or more fuel cell power supply controllers 40. Power controller 40 may interface communication signals and power with each of modules 50. Power controller 40 may further communicate with one or more tanks 60 (e.g., to control a pump, line pressure, or otherwise adjust the flow of compressed hydrogen from the tank). UAV 100 includes other components, such as one or more motors 70, one or motor rotors 80, one or more motor controllers 20, and payload 30. Power supply controller 40 may feed power from modules 50 to motors 70 directly or indirectly via motor controller 20.

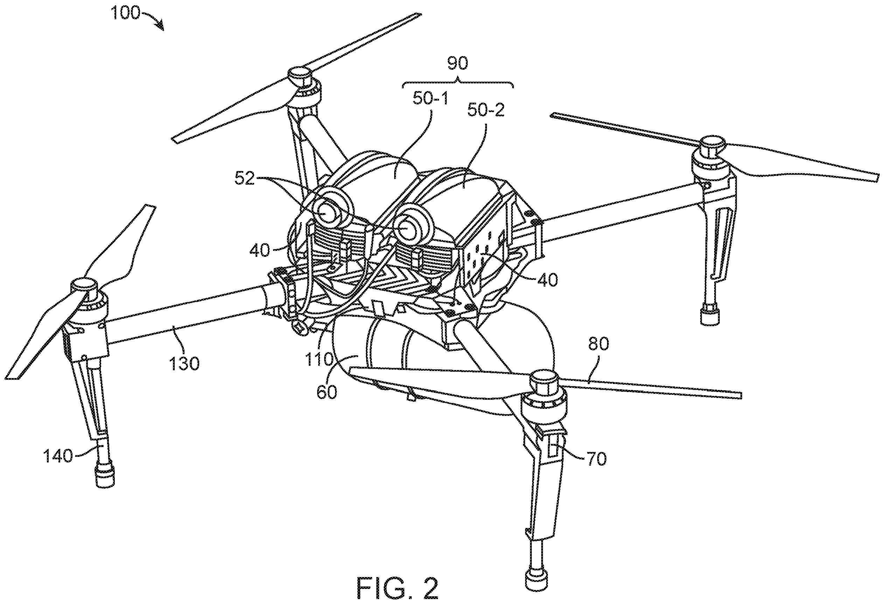

UAV 100, in FIGs. 2-4, may be a helicopter and comprise one or more propulsion systems coupled to frame 110 by one or more struts 130, which may also be referred to the arms or limbs of the UAV. Each propulsion system may comprise motor 70 that is capable of driving respective rotor 80. The number of propulsion systems in UAV 100 may vary depending on the aerodynamic design, payload, and flight time required.

Fuel cell power supply 90 may be removably coupled to frame 110 and electrically coupled to fuel cell power supply controller 40 via a suitable electrical adapter or plug 92. The struts may provide mechanical support and also may provide for conduits to carry signals (e.g., cables) that provide electrical and control communication between modules 50, power controller 40, motor controller 20, and each of the propulsion systems. The rotors 80 provide thrust and lift for UAV 100. Exemplary UAV 100 may also comprise a plurality of leg members 140 to support the UAV during landing and to protect payload 30 during landing.

Hydrogen feed to fuel cell power supply 90 is supplied by hydrogen supply 60 (e.g., a tank or cylinder), which may be removably mounted on saddles that may be mechanically coupled to frame 110. Hydrogen supply 60 may also be removably mounted to the frame 110 using brackets, ties, and the like. Hydrogen supply 60 may comprise a hydrogen connection assembly capable of mating with a first end of a hydrogen supply conduit using quick connect/disconnect fittings, magnetic couplings, and the like. The hydrogen connection assembly may comprise at least one of a pressure regulator, solenoid valve, shut off valve, and pressure relief valve to ensure that hydrogen at the desired flow rate and pressure is routed to power supply 90. Hydrogen supply 60 may be configured to store compressed hydrogen at a pressure below 700 bar.

In some exemplary implementations, for UAV 100, a selection between series and parallel configurations is made based on efficiency of fuel cell stack modules 50. In some exemplary implementations, the efficiency is based on a power output of modules 50. In some exemplary implementation, providing 25 Volts (V), known as 6s, to a propulsion system results in more efficient operation of motors 70 than if 50 V, known as 12s, were provided to a propulsion system.

The components that comprise the hydrogen connection assembly may be electrically actuated by a signal from motor controller 20 or from power supply controller 40. The second end of the hydrogen supply conduit that is opposite the first end is capable of mating with fuel cell connection assembly 91. Fuel cell connection assembly 91 may comprise at least one of a pressure regulator, solenoid valve, shut off valve, and pressure relief valve to ensure that hydrogen at the desired flow rate and pressure is routed to fuel cell power supply 90. The components included in the fuel cell connection assembly 91 may be electrically actuated by a signal from controller 20 or from power supply controller 40.

In some implementations, payload 30 may include one or more cameras and may be removably coupled to fuel cell power supply 90 or to frame 110 (FIGs. 2-4). Payload 30 is capable of communicating with at least one of controller 20, controller 40, and fuel cell power supply 90.

Controller 20 may be configured to control at least one of propulsion systems, operation of payload 30, and an auxiliary power supply, such as a rechargeable battery, which may be configured to store excess power generated by fuel cell power supply 90. Controller 40 may be configured to control at least one of the propulsion systems, operation of fuel cell power supply 90, operation of hydrogen supply 60, operation of payload 30, and the auxiliary power supply, such as the rechargeable battery.

In some exemplary implementations, auxiliary power supply, such as backup battery 35, may be removably coupled to frame 110. In some implementations, backup battery 35 is sized to provide a predetermined amount of peak power (e.g., for a known period of time, such as to recover from strong winds). In some exemplary implementations, backup battery 35 is a lithium-polymer battery.

The auxiliary power supply may also be used to power at least one of payload 30 and other component(s) of UAV 100 during a transient power period, such as take-off, or when fuel cell power supply 90 is producing less power than expected. Auxiliary power supplies may also comprise super capacitors and primary batteries. Exemplary systems and methods for operating a device using a fuel cell power supply and an auxiliary power supply to power a load (device such as UAV 100) are described in commonly owned U.S. Pat. No. 9,356,470 and U.S. Pat. Pub. No. 209040285.

Fuel cell power supply 90 may be provided in relation to fuel cell power supply controller 40, in which case, controller 20 is capable of communicating with fuel cell power supply controller 40 in a bidirectional manner. Alternatively, fuel cell power supply controller 40 may be used to control the components in fuel cell connection assembly 91 and the hydrogen connection assembly instead of controller 20. UAV 100 may return home after a flight, that is, to a home station or home base (not shown), after a flight to recharge or refill the power supplies.

In some exemplary implementations, two or more fuel cell stack modules 50 are linked in series or parallel, via a configuration facilitated by power controller 40. By having modules 50 supplying power in series, a power output (e.g., to the propulsion system) may be doubled, while doubling the supply voltage, e.g., from modules 50-1 and 50-2 from at or around 25 V to between 44.4 V and 50 V (but this example is not intended to be limiting, as any suitable voltage byproduct of the series configuration of any suitable number of modules 50 may be used). In these or other implementations, the doubling may occur while keeping a current through each of the two or more modules 50 (e.g., modules 50-1, 50-2) the same as if the each module was operating independently.

In UAV implementations where two or more modules 50 are arranged in parallel, the power doubling may be based on an output voltage of each of the two or more modules 50 being the same as if the each stack was operating independently and on an output current from the two or more modules 50 being doubled. In UAV implementations where modules 50 are connected in parallel, a total output current greater than that available from one individual module 50 may be obtained. The parallel configuration of modules 50 within UAV 100 may also be beneficial by providing redundancy, enhancing reliability, avoiding PCB thermal issues and boosting system efficiency. In some exemplary implementations, power controller 40 may be configured to balance a current from each of modules 50. That is, some exemplary implementations of modules 50 in the parallel configuration may be performed such that the load current is shared, e.g., to prevent one of modules 50 from shutting down before the required current is delivered. Some exemplary implementations may actively balance the output current from modules 50 using a control loop to compensate between modules 50. To accomplish this, some implementations may monitor both the voltage and temperature via the control loop.

Power controller 40 of UAV 100 is configured to detect a fault or failure of one of modules 50 and to cause the one or more other modules 50 to continue operating such that the propulsion system (i.e., motor(s) 70 and rotor(s) 80) is able to bring UAV 100 to a safe landing (e.g., without damaging payload 30 and/or any other component of UAV 100). Power controller 40 of UAV 100 is further configured to be controlled, either remotely via a device on the ground or locally via a direct connection on-board the unmanned aerial vehicle, to breach a safety threshold related to fuel cell overheating such that payload 30 has a better probability of landing undamaged, when the fault is detected, due to prioritizing safety of payload 30 over survival of any other component on UAV 100 (e.g., motors 70, modules 50, etc.). In some exemplary implementations, use of backup battery 35 to at least temporarily power the propulsion system(s) may increase the probability of a safe landing, responsive to the fault being detected.

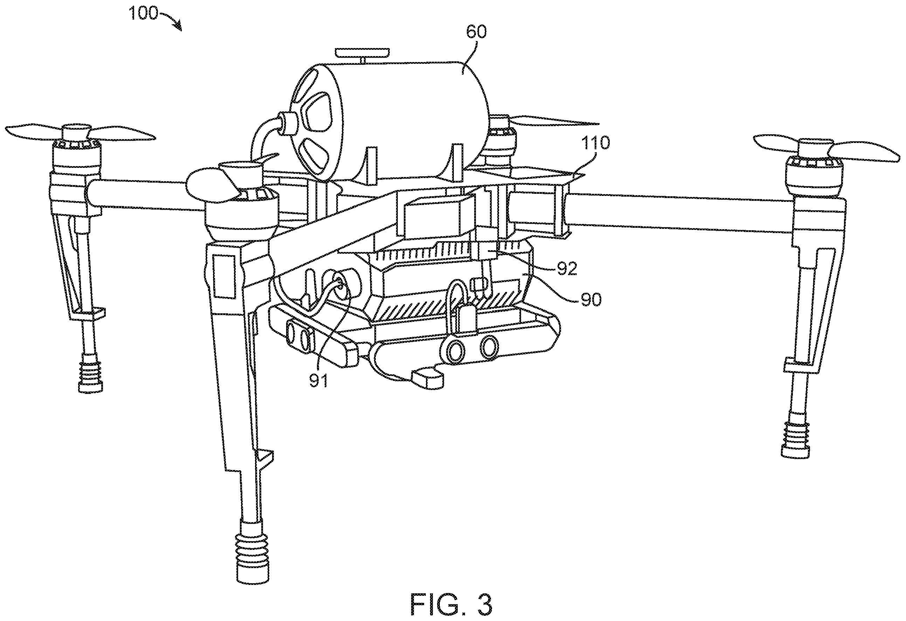

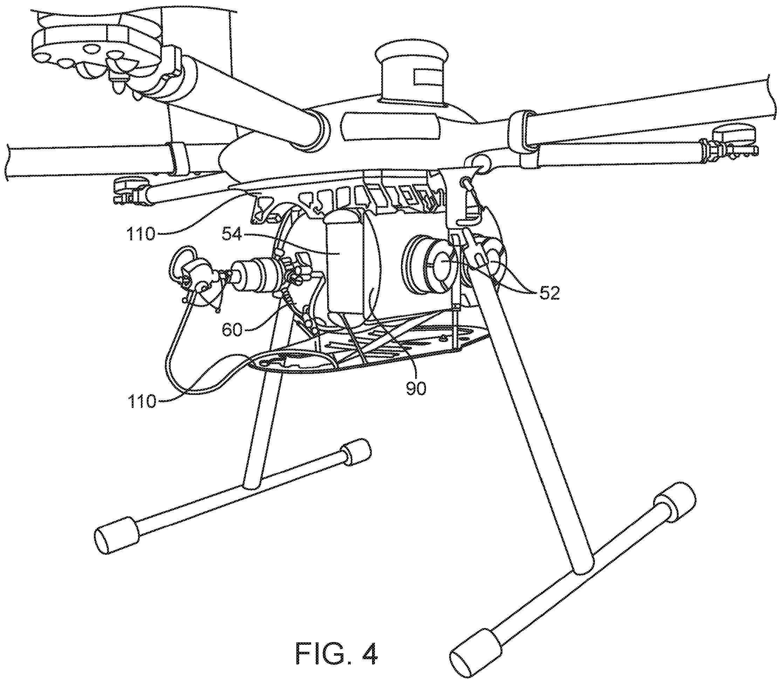

Fuel cell power supply 90 may comprise a plurality of fuel cell stack modules 50 (e.g., 50-1 and 50-2, as shown in FIG. 2). In some exemplary implementations, each of fuel cell stack modules 50 may be packaged independently and positioned separately around UAV 100. In other implementations, fuel cell stack modules 50 may be packaged together inside fuel cell power supply 90. As shown in FIG. 2, fuel cell power supply 90 (which comprises modules 50) may be located above hydrogen supply 60, with reference to UAV 100 being in a stationary position on the ground. Alternatively, fuel cell power supply 90 may be located below hydrogen supply 60 (FIG. 3). Alternatively, fuel cell power supply 90 and hydrogen supply 60 may be mounted adjacent to each other (FIG. 4).

Depending on the total power requirement of UAV 100, each of fuel cell stack modules 50 may output about 650 Watts (W) or about 800 W maximum continuous power, but any maximum continuous power output value is contemplated by the present disclosure. In some exemplary implementations, the maximum peak power output from each of modules 50 may be temporarily (e.g., for about 30 seconds or less) about 1000 W or about 1400 W. In some exemplary implementations, power modules 50 may be the same as each other. For example, module 50-1 may be identical to each of (if used) module 50-2, ... 50-n (n being any natural number). In this or another example, each of modules 50 may be configured to generate a same amount of power and have a same efficiency rating. In some exemplary implementations, module 50-1 may produce a different maximum continuous power output from any other module 50 (e.g., module 50-2). For example, a 650 W module may be configured in series with an 800 W module. In another example, a 650 W module may be configured in parallel with an 800 W module.

In some exemplary implementations, the double-headed arrows representing bidirectional communication may depict signals. These signals may convey communication data, e.g., command and control (e.g., a status) of each of fuel cell stacks 54, hydrogen supply 60 (e.g., current fill level, pressure level in the lines, etc.), motors 70, motor controller 20, fans 52, and/or payload 30, to/from controller 40.

In some exemplary implementations, fuel cell stack modules 50 may be connected in series only. For reasons related to being in a series configuration, the communication signals of each of modules 50 may be isolated from power controller 40. In a parallel configuration, some or more of the same signals would not require isolation; rather, these signals may be multiplexed through to controller 40.

In some exemplary implementations, when linking fuel cell stack modules 50 in series, UAV 100 may be prevented from having a virtual earth in the mid-rail. That is, some implementations may have connected a positive terminal of fuel cell stack module 50-2 to a negative terminal of fuel cell stack module 50-1, and in this configuration module 50-1's ground becomes module 50-2's power. Presently disclosed are thus methods to galvanically isolate the communication signals, via optically coupled technology combined with an analog to digital converter (ADC). Further disclosed are methods for isolating a transformer (which is relatively heavy), a simple opto-isolator, hall effect sensor, or series connected capacitors to decouple the signals. Some implementations may generate a common earth/ground inside an isolation barrier. In some exemplary implementations, the communication signals are isolated with respect to each of modules 50. Disclosed implementations thus overcome a problem of connecting modules 50 and/or controller 40, whereby direct connection there would otherwise be a virtual earth in the mid-rail.

The required total power output from power supply 90 may depend on the mass and/or functionality of payload 30. In some implementations, each of the fuel cell stack modules 50 may be an open cathode proton-exchange membrane fuel cell (PEMFC) stack module. A plurality of hydrogen supplies 60 may be employed depending on the flight time required and the mass budget that is available to the fuel supply for a given mass of payload 30. Payload 30 may be coupled to frame 110. In FIG. 4, UAV 100 comprises a single fuel cell power supply 90, which may include a plurality of separately-packaged fuel cell stacks 54 (connected in series or parallel) and a plurality of fans 52.

In some exemplary implementations, one or more components (e.g., fuel cell stack modules 50, hydrogen supplies 60, payload 30, power controllers 40, motor controllers 20, and battery 35) of UAV 100 may be affixed onto frame 110. In some exemplary implementations, manual pre-flight mechanical arrangement, power controller 40, or another controller may be configured to adjust the center of gravity (CoG) of UAV 100 by adjusting, via frame 110, a position or orientation of the one or more components.

While used to illustrate some different possible mounting configurations, the depictions of FIGs. 2-4 are not intended to be limiting, as any configuration or orientation of the various components of UAV 100 is contemplated. And controllers 20 and 40 may be mounted on frame 110 at any suitable location for an optimal CoG, with respect to flight characteristics of UAV 100. For example, these components may be mounted in a distributed fashion around frame 110 or at least some of the components may be lumped together. In some exemplary implementations, UAV 100 may have modules 50 distributed around frame 110 such that a center of mass of the vehicle is balanced and a manner in which the vehicle flies is controllably affected. In some exemplary implementations, the mounting placement and orientation of the components of UAV 100 may flexibly control the weight balance of the UAV as a whole. The mounting placement and orientation of these components may also be aerodynamically designed such that drag is minimized. By orientation, the present disclosure refers to rotating, flipping, or tilting one or more of the components of UAV 100. In implementations where a plurality of hydrogen supplies 60 are used, supplies 60 may be repositioned to balance weight distribution (i.e., including CoG considerations with respect to the other components of UAV 100). In these or other implementations, frame 110 may allow for both manual and automated reconfiguration. That is, power controller 40 or another component of UAV 100 may control positioning and orientation of supply 60, power controller 40, motor controller 20, payload 30, and each of fuel cell stack modules 50.

The power output as a function of cumulative time of service from fuel cell stack modules 50 is dependent on various factors, such as the ambient temperature, humidity, and number of start/stops. To ensure reliable operation of fuel cell power supply 90, it is desirable to check the condition (health) of fuel cell stack modules 50, e.g., when UAV 100 returns to the home base using a ground station to either condition stacks 54 or replace one or more of fuel cell stack modules 50. In particular, for long duration flights, it may be desirable to condition stacks 54 prior to take-off. In this disclosure, conditioning of stack 54 may include the conditioning of one or more fuel cells that comprise the stack.

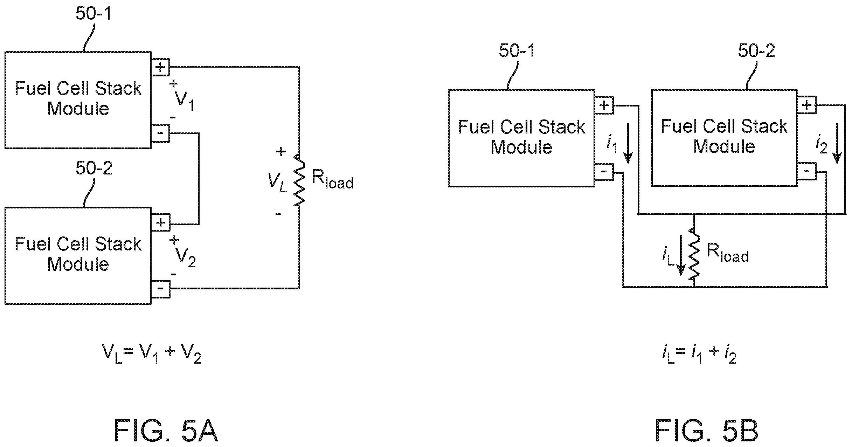

FIGs. 5A-5B show series and parallel configurations, respectively, of two fuel cell power modules. But these exemplary implementations are not intended to be limiting in number, since three or more power modules may be connected in a series or parallel configuration. In FIG. 5A, fuel cell stack module 50-1 is connected in series with fuel cell stack module 50-2, particularly, by connecting (i) its positive terminal to a "power" terminal of a resistive load, (ii) its negative terminal to the positive terminal of fuel cell stack module 50-2, and (iii) the negative terminal of fuel cell stack module 50-2 to a "ground" terminal of the resistive load. By contrast, FIG. 5B depicts fuel cell stack module 50-1 connected in parallel with fuel cell stack module 50-2, particularly, by connecting (i) its positive terminal to a "power" terminal of a resistive load and to the positive terminal of fuel cell stack module 50-2 and (ii) its negative terminal to a "ground" terminal of the resistive load and to the negative terminal of fuel cell stack module 50-2. In these and/or other implementations, the resistive load may be motor controller 20, motors 70, payload 70, and/or any electrical functionality associated with payload 30.

While the methods and fuel cell power systems have been described in terms of what are presently considered to be the most practical and preferred implementations, it is to be understood that the disclosure need not be limited to the disclosed implementations. The present disclosure includes any and all implementations of the following claims.

It should also be understood that a variety of changes may be made without departing from the essence of the disclosure. It should be understood that this disclosure is intended to yield a patent covering numerous aspects of the disclosure. Further, each of the various elements of the disclosure and claims may also be achieved in a variety of manners. This disclosure should be understood to encompass each such variation, be it a variation of an implementation of any apparatus implementation, a method or process implementation, or even merely a variation of any element of these, insofar as the variation falls within the scope of the appended claims.

As used throughout this application, the word "may" is used in a permissive sense (i.e., meaning having the potential to), rather than the mandatory sense (i.e., meaning must). The words "include", "including", and "includes" and the like mean including, but not limited to. As used herein, the singular form of "a," "an," and "the" include plural references unless the context clearly dictates otherwise. As employed herein, the term "number" means one or an integer greater than one (i.e., a plurality). As used herein, the statement that two or more parts or components are "coupled" means that the parts are joined or operate together either directly or indirectly, i.e., through one or more intermediate parts or components, so long as a link occurs. As used herein, "directly coupled" means that two elements are directly in contact with each other. As used herein, "fixedly coupled" or "fixed" means that two components are coupled so as to move as one while maintaining a constant orientation relative to each other. As used herein, the word "unitary" means a component is created as a single piece or unit. That is, a component that includes pieces that are created separately and then coupled together as a unit is not a "unitary" component or body. As employed herein, the statement that two or more parts or components "engage" one another means that the parts exert a force against one another either directly or through one or more intermediate parts or components.

In addition, it is to be understood that the phraseology or terminology employed herein, and not otherwise defined, is for the purpose of description only and not of limitation. Directional phrases used herein, such as, for example and without limitation, above, top, bottom, below, left, right, upper, lower, front, back, and derivatives thereof, relate to the orientation of the elements shown in the drawings and are not limiting upon the claims unless expressly recited therein.

Further, the use of the transitional phrase "comprising" is used to maintain the "open-end" claims herein, according to traditional claim interpretation. Thus, unless the context requires otherwise, it should be understood that the term "comprise" or variations such as "comprises" or "comprising," are intended to imply the inclusion of a stated element or step or group of elements or steps, but not the exclusion of any other element or step or group of elements or steps. Such terms should be interpreted in their most expansive forms so as to afford the applicant the broadest coverage legally permissible.

## Claims

1. An unmanned aerial vehicle, comprising:
a mounting frame (110) onto which at least a payload (30) is affixed;
a plurality of fuel cell stacks operable in a predefined configuration, each of the plurality of fuel cell stacks being in a separate package;
one or more tanks (60) configured to supply hydrogen to the plurality of fuel cell stacks;
a propulsion system configured to receive an output power generated from the plurality of fuel cell stacks; and
a power controller (40) configured to couple the plurality of fuel cell stacks in the predefined configuration;
wherein the propulsion system comprises one or more motors (70) and one or more rotors (80);
wherein the power controller (40) is further configured to detect a fault in one of the plurality of fuel cell stacks and to cause the other stack(s) to continue operating such that the propulsion system is able to bring the unmanned aerial vehicle to a safe landing; and
wherein the power controller (40) is further configured to be controlled, either remotely via a device on the ground or locally via a direct connection on-board the unmanned aerial vehicle, to breach a safety threshold related to fuel cell overheating such that the payload (30) has a non-negligible probability of landing undamaged, when the fault is detected, due to prioritizing safety of the payload (30) over survival of the stack(s) and/or of a motor (70) of the unmanned aerial vehicle.

2. The unmanned aerial vehicle of claim 1, further comprising:
a backup battery (35),
wherein the probability is increased via use of the backup battery (35), responsive to the fault being detected.

## Patentansprüche

1. Unbemanntes Luftfahrzeug, umfassend:
einen Montagerahmen (110), an dem mindestens eine Nutzlast (30) befestigt ist;
eine Vielzahl von Brennstoffzellenstapeln, die in einer vordefinierten Konfiguration betrieben werden können, wobei sich jeder der Vielzahl von Brennstoffzellenstapeln in einem separaten Paket befindet;
einen oder mehrere Tanks (60), die konfiguriert sind, um die Vielzahl von Brennstoffzellenstapeln mit Wasserstoff zu versorgen;
ein Antriebssystem, das konfiguriert ist, um eine Ausgangsleistung, die von der Vielzahl von Brennstoffzellenstapeln erzeugt wird, zu empfangen; und
eine Leistungssteuerung (40), die konfiguriert ist, um die Vielzahl von Brennstoffzellenstapeln in der vordefinierten Konfiguration zu koppeln;
wobei das Antriebssystem einen oder mehrere Motoren (70) und einen oder mehrere Rotoren (80) umfasst;
wobei die Leistungssteuerung (40) ferner konfiguriert ist, um einen Fehler in einem der Vielzahl von Brennstoffzellenstapeln zu erkennen und ein Betreiben des/der anderen Stapel(s) derart fortzusetzen, dass das Antriebssystem in der Lage ist, das unbemannte Luftfahrzeug zu einer sicheren Landung zu bringen; und
wobei die Leistungssteuerung (40) ferner konfiguriert ist, um entweder ferngesteuert über eine Vorrichtung am Boden oder lokal über eine direkte Verbindung an Bord des unbemannten Luftfahrzeugs gesteuert zu werden, um einen Sicherheitsschwellenwert in Bezug auf ein Überhitzen der Brennstoffzelle derart zu überschreiten, dass die Nutzlast (30) bei Erkennung des Fehlers eine nicht zu vernachlässigende Wahrscheinlichkeit aufweist, unbeschädigt zu landen, da die Sicherheit der Nutzlast (30) Vorrang vor dem Überleben des/der Stapel(s) und/oder eines Motors (70) des unbemannten Luftfahrzeugs hat.

2. Unbemanntes Luftfahrzeug nach Anspruch 1, ferner umfassend:
eine Reservebatterie (35),
wobei die Wahrscheinlichkeit durch Verwendung der Reservebatterie (35) als Reaktion auf die Erkennung des Fehlers erhöht wird.

## Revendications

1. Véhicule aérien sans pilote, comprenant :
un cadre de montage (110) sur lequel est fixée au moins une charge utile (30) ;
une pluralité d'empilements de piles à combustible pouvant fonctionner dans une configuration prédéfinie, chacun de la pluralité d'empilements de piles à combustible se trouvant dans un conditionnement séparé ;
un ou plusieurs réservoirs (60) conçus pour alimenter en hydrogène la pluralité d'empilements de piles à combustible ;
un système de propulsion configuré pour recevoir une puissance de sortie générée à partir de la pluralité d'empilements de piles à combustible ; et
un dispositif de commande de puissance (40) configuré pour coupler la pluralité d'empilements de piles à combustible dans la configuration prédéfinie ;
dans lequel le système de propulsion comprend un ou plusieurs moteurs (70) et un ou plusieurs rotors (80) ;
dans lequel le dispositif de commande de puissance (40) est en outre configuré pour détecter une défaillance dans l'un de la pluralité d'empilements de piles à combustible et pour amener le ou les autres empilements à continuer de fonctionner de manière à ce que le système de propulsion puisse amener le véhicule aérien sans pilote à un atterrissage en toute sécurité ; et
dans lequel le dispositif de commande de puissance (40) est en outre configuré pour être commandé, soit à distance par l'intermédiaire d'un dispositif au sol, soit localement par l'intermédiaire d'une connexion directe à bord du véhicule aérien sans pilote, pour franchir un seuil de sécurité lié à la surchauffe de la pile à combustible de sorte que la charge utile (30) ait une probabilité non négligeable d'atterrir sans dommage, lorsque la défaillance est détectée, en raison de la priorité accordée à la sécurité de la charge utile (30) par rapport à la survie de la ou des empilements et/ou d'un moteur (70) du véhicule aérien sans pilote.

2. Véhicule aérien sans pilote selon la revendication 1, comprenant en outre :
une batterie de secours (35),
dans lequel la probabilité est augmentée par l'utilisation de la batterie de secours (35), en réponse à la détection de la défaillance.
